# FASCICULE DE BREVET EUROPEEN

(11) **EP 2 862 391 B1**
(45) Date de publication et mention de la délivrance du brevet: **29.03.2023**
(21) Numéro de dépôt: 13774215.1
(22) Date de dépôt: 10.10.2013
(51) Int. Cl.: H04W 36/16, H04W 48/18, H04W 36/30

(54) **PROCÉDÉ DE ROAMING EN CAS DE DÉFICIENCE DU SERVICE DONNÉES D'UN RÉSEAU DE TÉLÉPHONIE MOBILE**
ROAMING-VERFAHREN BEI MANGELNDEM DATENDIENST EINES MOBILFUNKNETZES
METHOD OF ROAMING IN THE EVENT OF DEFICIENCY OF THE DATA SERVICE OF A MOBILE TELEPHONE NETWORK

(30) Priorité: 10.10.2012 FR 1259675
(43) Date de publication de la demande: 22.04.2015
(73) Titulaire: Bouygues Telecom, 75116 Paris (FR)
(72) Inventeur: LEHOUX, Fabrice, F-91300 Massy (FR)
(74) Mandataire: Regimbeau
(86) Numéro de dépôt international: PCT/EP2013/071222
(87) Numéro de publication internationale: WO 2014/057066

(56) Documents cités:
- WO-A1-2004/066663
- WO-A2-2006/047247
- GB-A- 2 437 129
- US-A1- 2005 037 755
- US-A1- 2010 216 465
- US-A1- 2011 021 195

## Description

### DOMAINE TECHNIQUE GENERAL

La présente invention concerne le domaine du roaming (en français « itinérance ») réseau en téléphonie mobile.

Plus précisément, elle concerne un procédé d'itinérance pour un terminal en cas de déficience du service données d'un réseau de téléphonie mobile.

### ETAT DE L'ART

Les « objets communicants » sont un type de dispositifs informatiques qui comprennent une carte SIM et sont aptes à interagir de façon autonome avec d'autres objets ou serveurs via les réseaux de téléphonie mobile. Ce domaine, en pleine expansion, s'avère tributaire de la qualité des réseaux.

Les objets communicants (ainsi que les équipements des usagers de la téléphonie mobile en général) situés dans un pays qui n'est pas le pays d'origine du fournisseur du service, sont dits en situation de « roaming » (en français « itinérance »), situation dans laquelle des risques de blocage à cause d'un accident réseau peuvent être minimisés.

En effet, tel qu'ils sont définis par les normes GSM/UMTS dans les réseaux mobiles, les mécanismes de roaming décrivent la capacité des clients à accéder à leurs services de téléphonie mobile (voix ou données) en sélectionnant un des réseaux locaux disponibles dans la zone et si besoin en passant d'un réseau à un autre.

Les objets communicants (ainsi que les équipements des usagers de la téléphonie mobile en général) disposent ainsi d'un niveau de qualité de service élevé qui est permis, grâce à des multiples accords d'itinérance signés entre des opérateurs, par une bascule d'un opérateur à un autre lors d'un incident réseau ou en fonction de la couverture géographique de chacun des opérateurs partenaires.

Toutefois, la sélection d'un réseau est aujourd'hui basée sur « l'accroche GSM ». Cela fait que si un incident sur le réseau d'un opérateur impacte uniquement la data (les données) et pas la localisation GSM de cet opérateur (donc la voix), ou si la couverture de l'opérateur dans la zone actuelle se limite à la voix, l'équipement reste quand même accroché sur cet opérateur, quand bien même un opérateur présent dans la même zone fournirait potentiellement le service data manquant. Le roaming ne remplit alors plus son rôle.

Un utilisateur humain peut contourner le problème en choisissant une sélection manuelle du réseau, ce qui reste toutefois contraignant. Dans le cas d'objets communicants, la seule solution pour utiliser le mode manuel serait de développer une intelligence au niveau d'une couche applicative (le système de l'objet communiquant). Toutefois, cela apparait complexe et devrait être accompli spécifiquement par chacun des fabricants d'équipements.

Il serait par conséquent souhaitable de disposer d'un mécanisme de roaming amélioré qui apporte une solution simple et universelle de back-up en cas d'incident impliquant le service données d'un réseau, sachant que comme expliqué précédemment le roaming est décrit dans des normes et qu'il n'est donc pas possible pour les opérateurs de modifier sensiblement les mécanismes existants. Un autre exemple se trouve dans les documents WO 2004/066663; US 010/216465; US 2011/021195 et US 2005/037755.

### PRESENTATION DE L'INVENTION

La présente invention se rapporte ainsi à un procédé d'itinérance tel que défini par la revendication 1.

D'autres caractéristiques avantageuses et non limitatives du procédé selon l'invention sont énoncées dans les revendications dépendantes 2 à 11.

Selon un deuxième aspect, l'invention concerne une carte d'identification d'abonné comprenant des moyens de traitement de données et des moyens de stockage de données sur lesquels sont stockés une liste EF-FPLMN de réseaux de téléphonie mobile interdits auxquels le terminal n'est pas autorisé à se connecter et une liste EF-PPLMN de réseaux de téléphonie mobile préférés auxquels le terminal se connecte en priorité, caractérisé en ce que les moyens de traitement de la carte d'identification d'abonné sont configurés pour la mise en oeuvre du procédé selon le premier aspect de l'invention.

Selon un troisième aspect, l'invention concerne un terminal comprenant des moyens de traitement de données, des moyens de connexion à un réseau de téléphonie mobile, caractérisé en ce qu'il comprend en outre une carte d'identification d'abonné selon le deuxième aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence à l'unique figure indexée représentant un schéma d'une architecture de réseau pour la mise en oeuvre du procédé selon l'invention.

### DESCRIPTION DETAILLEE

### Voix/données

Les technologies actuelles de téléphonie cellulaire sont basées sur la distinction entre les échanges de type « voix » et les échanges de type « données ». Les « données » regroupent basiquement tout ce qui n'est pas la « voix ». Ces deux modes d'échanges se distinguent par leur usage (essentiellement les communications téléphoniques ou SMS pour la voix, et les connexions internet ou entre réseaux privés pour les données) et par leur mode de commutation. En effet, les « données » sont échangées en mode « paquets », en particulier suivant le protocole PDP (« Packet Data Protocol »). Un paquet des données est ainsi composé de trois éléments :
- La tête (« header ») qui contient les informations nécessaires pour transférer le paquet de l'émetteur au récepteur ;
- La charge (« payload ») qui contient les données ;
- La queue (« trailer ») qui comprend le code de correction des erreurs.

Le découpage entre voix et données se traduit par l'utilisation respective des normes GSM (« Global System for Mobile communication ») et GPRS (« Global Packet Radio Service »). Et comme expliqué précédemment, la sélection du réseau se fait actuellement uniquement sur « l'accroche GSM », en d'autres termes la disponibilité du service voix.

Le présent procédé vise comme expliqué précédemment à assurer un basculement de réseau dans le cas où le service données est absent ou perturbé, mais le service voix est en fonctionnement normal (i.e. accroche GSM satisfaisante).

Par service données perturbé, on entend soit un service complètement interrompu (connexion impossible ou interrompue), soit un service fortement ralenti (débit anormalement bas), de façon générale tous les cas dans lesquels le débit de données est insuffisant pour un usage satisfaisant. Par service données absent, on entend un service non géré par l'opérateur (un réseau GSM 2G ne supportant pas le GPRS, ou un réseau non déployé). Dans la suite de la présente description, on utilisera le terme « déficience » pour désigner une perturbation ou une absence du service données.

Les diverses manifestations d'une perturbation de service réseau seront décrites en détail plus loin.

On comprendra que le présent procédé n'est pas conçu pour traiter les cas de perturbation totale (voix + données) ou de perturbation de service voix seul pour lesquels les mécanismes actuels de roaming apportent satisfaction. Il a vocation à fonctionner en complément de ceux-ci.

### Carte SIM

Une carte SIM (« Subscriber Identity Module ») est une puce de type UICC (« Universal Integrated Circuit Card ») comprenant des moyens de traitement de données (sous la forme d'un microcontrôleur) et de la mémoire (de type EEPROM (« Electrically-Erasable Programmable Read-Only Memory ») ou flash, généralement d'une taille de 64Ko, bien que des modèles de 128 ou 256Ko sont disponibles).

Elle permet de stocker les informations spécifiques à l'abonné du service de téléphonie mobile, ainsi qu'éventuellement des données et des applications de l'utilisateur (par exemple son répertoire).

Parmi les données essentielles (dont l'organisation est régie par les normes GSM et GPRS), on trouve des fichiers dits élémentaires (EF, « Elementary Files »), parmi lesquels des listes de réseaux PLMN (« Public Land Mobile Network), en d'autres termes les réseaux de télécommunications entre lesquels le roaming peut s'effectuer.

Parmi ces listes, on trouve ainsi l'EF-FPLMN (la liste des « Forbidden » PPLMs) et l'EF-PPLMN (la liste des « Preferred » PPLMNs), chacune pouvant contenir le nom de quatre réseaux. La première regroupe les réseaux auquel on interdit la SIM de se connecter, et la seconde les réseaux auquel la SIM se connecte en priorité. On trouve d'autres fichiers, par exemple les EF-LOCI et EF-LOCIGPRS (« LOCation Information ») qui seront décrits plus loin.

Il est à noter que la présente invention s'adresse particulièrement au cas du roaming international, comme expliqué précédemment, mais on comprendra qu'elle pourrait tout à fait s'appliquer dans le cas d'un roaming national (itinérance dans le pays d'origine de la carte SIM).

### Principe de l'invention

Le présent procédé est basé sur l'utilisation temporaire de la liste des FPLMNs pour écarter un réseau dont le service données est déficient (perturbé ou absent).

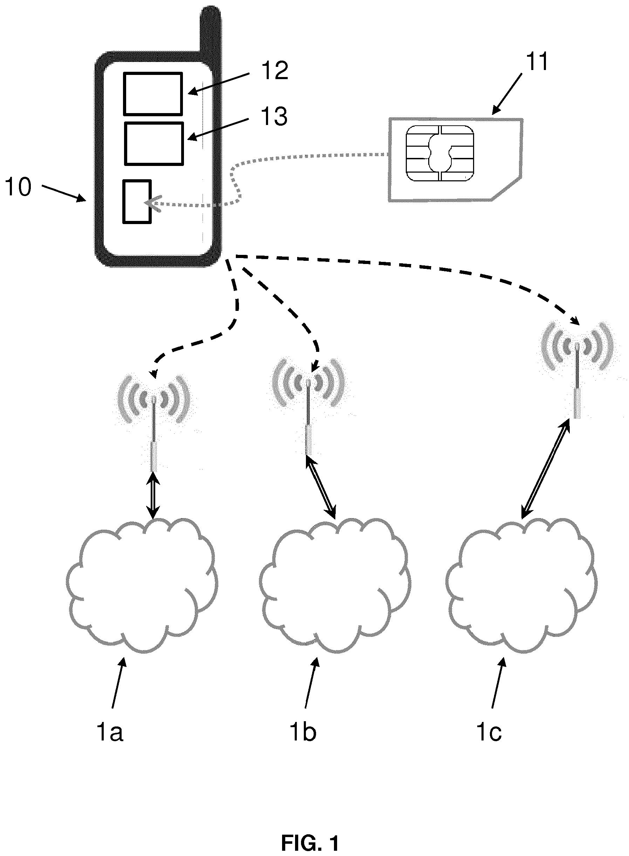

En référence à la figure 1, le procédé selon l'invention est mis en oeuvre (au moins en grande partie, comme l'on verra plus loin) par une carte d'identification d'abonné 11 (Par « carte d'identification d'abonné », on comprendra tout circuit intégré capable d'assurer les fonctions d'identification d'un abonné via des données qui y sont stockées, et tout particulièrement une carte SIM) d'un terminal 10 connecté à un premier réseau 1a de téléphonie mobile, réseau pour lequel un incident du service données est en cours.

Au moins un autre réseau est disponible. Sur la figure 1 sont représentés un deuxième réseau 1b et un troisième réseau 1c. Le terminal 10 peut se connecter à chacun des réseaux 1a, 1b, 1c via des moyens de connexion du terminal 10 et des antennes-relais des réseaux 1a, 1b, 1c. Il est à tout fait possible (bien que statistiquement improbable) que deux réseaux présentent simultanément une déficience de leur service données, et comme on verra plus loin ce cas peut être pris en compte et résolu par le présent procédé d'itinérance.

On supposera toutefois dans la suite de la présente description qu'il existe à tout instant au moins un réseau pour lequel le service données est opérationnel (en d'autres termes non-déficient). Si dans le pire des cas, tous les réseaux étaient défectueux, comme l'on verra plus loin le procédé propose une porte de sortie.

Le terminal 10 peut être comme expliqué précédemment soit un objet communiquant, soit un terminal mobile personnel (un smartphone, une tablette tactile, etc.). Dans tous les cas, il comprend des moyens de traitement de données 13 pour la mise en oeuvre d'un système et d'applications, et un modem 12 pour la connexion au service données. Il comprend comme expliqué une carte d'identification d'abonné 11 (en particulier une carte SIM telle que décrite précédemment) pour le stockage des informations de connexion aux réseaux de téléphonie mobile et notamment des fichiers EF

Dans la suite de la présente description, on prendra l'exemple d'une carte SIM, mais on comprendra que le terme « d'identification d'abonné » ne doit pas être réduit aux cartes SIM mais peut concerner tous les supports actuels et à venir d'identification de l'abonné, quelle que soit leur technologie, c'est-à-dire pas forcément des puces de type UICC. On notera d'ailleurs qu'il est courant pour les objets communicants que cette puce ne présente pas le format « classique » d'une carte SIM mais soit directement soudée sur la carte mère. En outre, à titre d'exemple, on citera des solutions alternatives utilisant des cartes microSD (« Secure Digital ») qui comprennent également des moyens de traitement de données et un espace de stockage apte à stocker des fichiers EF.

Le procédé d'itinérance comprend une première étape de détection d'une déficience affectant le service données du premier réseau 1a auquel le terminal 10 est connecté. Différentes façons de détecter cette perte de service seront décrites plus loin.

Dans une deuxième étape, le procédé comprend l'inscription dudit premier réseau 1a pour lequel une déficience du service données a été détectée dans une liste de réseaux interdits (FPLMN) stockée dans des moyens de stockage de la carte SIM 11.

Dans une troisième étape, le procédé comprend la sélection d'un nouveau réseau 1b, 1c et la connexion du terminal 10 audit nouveau réseau 1b, 1c. Cette étape se fait plus particulièrement en relançant (« refresh ») le modem 12 du terminal 10 (par refresh, on entend une simple réactualisation de la connexion et pas nécessairement un redémarrage du modem) et/ou la carte SIM 11. Il est à noter que les relances de la carte SIM 11 et du modem 12 sont en général liées, dans la mesure où le redémarrage de l'un entraîne aujourd'hui le redémarrage de l'autre. Un redémarrage du terminal 10 entraîne par ailleurs dans tous les cas le redémarrage de ces deux composants.

Alternativement, on peut prévoir dans cette troisième étape de demander au modem 12 en particulier via une commande standardisée (option du refresh de type « SIM initialization ») de venir recharger les fichiers contenus dans la SIM 11 et donc de déclencher une nouvelle sélection de réseau.

Alors que le modem 12 aurait théoriquement dû se reconnecter simplement au réseau 1a problématique (car c'est le dernier réseau opérationnel en termes de service voix auquel le terminal a été connecté, et il est dès inscrit dans une liste EF-LOCI des moyens de stockage de la carte SIM 11), le fait que ce réseau soit classé comme interdit l'en empêche.

Le modem choisit alors un des autres réseaux 1b, 1c disponibles (en choisissant en général celui dont la puissance reçue est la plus élevée ou un réseau « préféré » comme l'on verra plus loin, car il a de grandes chances d'être le réseau avec la meilleure qualité de communications) et s'y connecte.

Il est alors à noter que le nouveau réseau est retesté. En effet, le fait que le modem 12 ait décidé de se connecter à ce réseau signifie seulement que son service voix est opérationnel, il est tout à fait possible que son service données soit également déficient (la probabilité que deux réseaux de deux opérateurs soient simultanément en panne est infime, mais on peut envisager le cas où le nouveau réseau capté soit un réseau purement voix, ou qu'il soit déjà sévèrement engorgé à cause de la panne du premier). Le cas échéant, les deuxièmes et troisièmes étapes du procédé sont relancées, et le nouveau réseau est rajouté à la liste des FPLMNs (afin que ni lui ni le précédent réseau ne puissent être sélectionnés suite au 2ème refresh du modem 12).

Les deuxième et troisième étapes peuvent être répétées itérativement jusqu'à trouver un réseau pour lequel le service données n'est pas déficient. Il est à noter que la liste de FPLMNs d'une carte SIM 11 est en général prévue pour contenir jusqu'à quatre réseaux, mais on peut vraisemblablement supposer que cette limite ne pose pas de problèmes (il faudrait une panne simultanée de cinq réseaux !).

Selon un mode de réalisation avantageux, on prévoit un compteur qui compte le nombre d'itérations du procédé. Grâce à ce compteur, peut être prévue une valeur seuil (en particulier trois ou quatre) au-delà de laquelle on ne relance plus le procédé même si le service données est toujours déficient. Cela permet de prévenir une situation de panne globale (par exemple au niveau d'un noeud internet, laquelle affecterait un territoire complet) dans laquelle aucun réseau 1a, 1b, 1c ne serait en mesure de fournir le service données, voire de bloquer tout mauvais comportement. La probabilité que quatre ou cinq réseaux subissent simultanément des pannes indépendantes est en effet très faible. A la fin du compteur (i.e. lorsque l'on tente de relancer le procédé alors qu'on a atteint le seuil fixé, ici trois ou quatre), en l'absence de relance de procédé, le modem 12 reste connecté à un réseau 1a, 1b, 1c ne disposant que du service voix. Dans cette situation de seuil atteint, la liste des réseaux interdits (FPLMN) est « purgée », c'est-à-dire que comme l'on verra plus loin la liste est remise à zéro pour arrêter toute influence du procédé. Une option peut consister à ajouter en plus une demande de « refresh » comme lors de la troisième étape.

La quatrième étape du procédé consiste en une remise de ladite liste de réseaux interdits (FPLMN) dans l'état ou elle était avant le début du procédé (en d'autres termes le retrait du ou des réseaux inscrits), une fois qu'une connexion à un réseau valide (aussi bien en voix qu'en données) a pu être établie. Le (ou les) premier(s) réseau(x) 1a rajouté(s) dans cette liste présente(nt) en effet une déficience qui a toutes les chances de n'être qu'un incident temporaire, et il ne faudrait pas priver le terminal 10 d'une possibilité de future connexion à ce réseau. Dans le cas où la liste de FPLMNs était initialement vide, cette étape consiste en une « purge » de la liste, c'est-à-dire une remise à zéro. Il peut aussi être envisagé de purger dans tous les cas la liste pour éviter tout effet de bord négatif de la SIM 11 au cours de sa vie (indépendamment du procédé).

Il est à noter que dans le cas d'un compteur tel que décrit précédemment, celui-ci est également remis à zéro lors de cette quatrième étape.

Au prochain redémarrage du terminal 10, ou à la prochaine déficience du réseau « actuel », ou un nouveau déclenchement du procédé, le terminal 10 considérera l'ancien réseau 1a comme tout autre réseau de téléphonie mobile.

A titre d'exemple (en supposant une liste des PPLMNs vide, voir plus loin), on peut supposer en référence à la figure 1 que le premier réseau 1a subit une panne de service données, que le deuxième réseau 1b est un réseau purement voix, et que le troisième réseau 1c présente un service données opérationnel, mais est un réseau dont la puissance est inférieure au deuxième réseau 1b.

Cela fait que suite à la première mise en oeuvre des trois premières étapes du procédé, le premier réseau 1a est dans la liste des FPLMNs et le deuxième réseau 1b est le nouveau réseau choisi en remplacement. Ce nouveau réseau est alors testé (dans une étape similaire à la première étape du procédé). On constate alors que ce nouveau réseau (le deuxième réseau 1b) ne présente pas de service données, et le procédé est relancé. Le deuxième réseau 1b est mis à son tour dans la liste des FPLMNs, et ainsi seul le troisième réseau 1c peut être sélectionné par le modem 12.

Ce troisième réseau 1c étant opérationnel aussi bien en voix qu'en données, le procédé n'est pas relancé et la liste des FPLMNs est purgée (elle contenait les premier et deuxième réseaux 1a, 1b). Le compteur qui avait pour valeur (2) est remis à zéro.

Il est à noter que l'espace EF de la mémoire de la carte SIM peut contenir une liste de réseaux préférés (PPLMN). Toutefois, dans l'hypothèse où un réseau serait inscrit à la fois dans la liste des PPLMNs et la liste des FPLMNs, certains modems 12 pourraient mal réagir. Par sécurité, si un réseau de la liste des PPLMNs venait à subir un incident réseau, il peut être possible de statuer que cette liste de PPLMNs doit être vide, ou retirer le premier réseau détecté comme présentant un service données déficient détecté (comme ce qui est fait pour la liste des FPLMNs à la dernière étape du procédé) dès lors que le procédé est déclenché (suite à la première étape), et le réinscrire dans la liste des PPLMNs au moment de la purge des FPLMNs.

Selon un mode de réalisation avantageux du procédé, il est possible d'utiliser des temporisateurs (des « timers »), en complément ou en remplacement du compteur déjà mentionné, pour limiter des bascules intempestives et répétitives. Pour cela on utilisera la fonction « Poll Interval » de la fonction standardisée STK (« Sim Tool Kit »).

D'une part, il est possible de conditionner le déclenchement du procédé (i.e. la détection d'une déficience du service données de la première étape) à un premier temporisateur. En d'autres termes suite à une première détection, on reteste le service données à l'issue de ce premier temporisateur pour vérifier que la déficience constatée n'était pas un artefact ou le résultat temporaire d'un mauvais positionnement du terminal par rapport à une antenne. Il est à noter que la norme prévoit plusieurs tentatives de connexion du modem en cas d'échec, et le temporisateur permet également d'attendre que ces tentatives aient toutes été faites.

Alternativement ou en complément, il est possible de prévoir le déclenchement d'un second temporisateur (au moment de la quatrième étape, c'est-à-dire lorsque le choix d'un nouveau réseau est entériné) avant la fin duquel le procédé ne peut pas être à nouveau mis en oeuvre. Cela permet de « geler » la bascule pendant un temps donné.

### Détection d'une déficience affectant le service données du premier réseau

On comprendra que le présent procédé n'est limité à aucune manière particulière de détecter une déficience du service données.

Une première possibilité, donnée à titre d'exemple, consiste à détecter une perte « d'accroche GPRS », par analogie avec l'accroche GSM (qui est caractéristique du fonctionnement nominal du service voix). Pour cela, les moyens de traitement de données de la carte SIM 11 peuvent consulter un fichier d'informations de localisation GPRS (LOCIGPRS) stocké lui aussi dans l'espace EF des moyens de stockage de la carte SIM 11. Ce fichier contient notamment l'information mise à disposition par le terminal 10 de l'état de l'accroche GPRS et peut en effet contenir l'identifiant d'un point d'accès au service données.

Sachant qu'une mise à jour du fichier LOCIGPRS par le modem 12 est notifiée aux moyens de traitement de données de la carte SIM 11, il est de façon préférée mis en oeuvre une vérification de l'accroche GPRS à chacune de ces notifications. Alternativement, cette technique peut être mise en oeuvre à intervalles réguliers pour sonder l'état du service données. Pour cela on utilisera la fonction « Poll Interval » de la fonction standardisée STK (« Sim Tool Kit »).

Une seconde possibilité, également donnée à titre d'exemple, consiste à détecter un échec d'ouverture d'une session PDP, PDP (« Packet Data Protocol ») étant comme expliqué le protocole du service données. Cette détection présente l'avantage d'être mise en oeuvre quand le service données est sollicité. Pour cela, les moyens de traitement de données de la carte SIM 11 peuvent solliciter le modem 12 via une commande AT « AT+CGATT? » encapsulée dans un message APDU (« Application Protocol Data Unit ») et obtenir en réponse si la session PDP est activée ou non.

Cette technique peut similairement être mise en oeuvre à intervalles réguliers pour sonder l'état du service données. Cela sera par exemple le cas, après une temporisation définie, après avoir détecté que l'Accroche GPRS est opérationnelle (contrôle décrit dans la première possibilité décrite ci-dessus).

Ces deux techniques de détection de déficience du service données peuvent être entièrement mises en oeuvre par la carte SIM 11 elle-même, et permettent donc une mise en oeuvre de la totalité du procédé par la carte SIM 11 seule. Il n'est alors pas nécessaire d'opérer la moindre modification d'une couche applicative du terminal 10. Les seuls prérequis du modem 12 sont le support de la fonction STK (plus particulièrement la commande Refresh) et de la commande AT ci-dessus.

Alternativement ou en complément, une ou plusieurs techniques de détection peuvent être mises en oeuvre au niveau applicatif (donc par des moyens de traitement 13 du terminal 10). La première étape de procédé comprend alors l'envoi à la carte SIM 11 d'une commande caractéristique d'une déficience affectant le service données du premier réseau 1a auquel le terminal 10 est connecté. Cette commande peut être plus particulièrement une commande STK (« SIM Tool Kit ») ou une commande propriétaire encapsulée dans un message APDU (« Application Protocol Data Unit »). Il s'agit d'une norme GSM définissant un ensemble de commandes permettant d'initier des actions au niveau de la carte SIM 11. Les commandes STK/APDU sont donc particulièrement adaptées au déclenchement du présent procédé. A réception de cette commande, les moyens de traitement de la carte SIM 11 déclencheront le procédé pour permettre le changement de réseau (deuxième, troisième et quatrième étapes).

L'utilisation de la couche applicative implique des modifications logicielles des systèmes des terminaux, mais permet une détection de déficience beaucoup plus fine. En effet, il est tout à fait possible que le service données soit perturbé bien qu'aucune perte d'attache GPRS ou de session PDP n'ait été constatée.

Une troisième possibilité, également donnée à titre d'exemple, consiste à détecter par les moyens de traitement 13 du terminal 10 d'une perte de connexion à un serveur distant. Cela se fait par détection d'une absence de dialogue entre le terminal et une appli métier distante suite à des requêtes, ou d'un PING sans réponse Ceci est particulièrement utile dans le cas d'un objet communicant, lequel est prévu pour être en permanence en connexion avec un serveur applicatif donné. Une perte d'échanges avec ce serveur est synonyme de panne, quel que soit l'état des paramètres réseaux. Il est toutefois important qu'une panne du serveur distant ne soit pas interprétée à tort comme une panne du service données, c'est pourquoi plusieurs serveurs distants doivent être préférablement testés.

Une quatrième possibilité, également donnée à titre d'exemple, consiste à détecter, par des moyens de traitement 13 du terminal 10, un débit de données anormalement bas. En effet, il reste possible que le lien avec le serveur applicatif ne soit pas brisé, mais que l'incident en cours du service données entraîne un débit particulièrement bas, entraînant des ralentissements voire des pertes de paquets. Une telle dégradation du service données peut être suffisante pour justifier le déclenchement du procédé de roaming. Des techniques de mesure du débit sont connues de l'homme du métier.

On comprendra que le procédé peut recourir à chacune de ces techniques seule ou en complément les unes avec les autres.

### Carte d'identification d'abonné & Terminal

Selon un deuxième et un troisième aspect, l'invention concerne d'une part la carte d'identification d'abonné 11 comprenant des moyens de traitement de données et des moyens de stockage de données sur lesquels sont stockés une liste de réseaux interdits (FPLMN), les moyens de traitement de la carte d'identification d'abonné étant configurés pour la mise en oeuvre du procédé selon le premier aspect ; et d'autre part le terminal 10 comprenant des moyens de traitement de données 13, des moyens de connexion à un réseau 1a de téléphonie mobile, et une carte d'identification d'abonné 11 selon le deuxième aspect.

La carte d'identification d'abonné 11 selon le deuxième aspect de l'invention est de façon préférée une carte SIM configurée pour mettre en oeuvre une détection d'une déficience affectant le service données du premier réseau selon la première (accroche GPRS) ou la deuxième (session PDP) technique décrite précédemment, de sorte à être « autosuffisante » : la simple insertion de cette carte SIM 11 dans un terminal 10 permet de mettre en oeuvre le procédé, sans aucune modification du terminal.

En revanche, le terminal 10 selon le troisième aspect de l'invention est de façon préférée configuré pour mettre en oeuvre une détection d'une déficience affectant le service données du premier réseau selon la troisième (connexion à un serveur applicatif distant) ou quatrième (mesure du débit) technique décrite précédemment, la carte d'identification d'abonné 11 recevant alors une commande émise par les moyens de traitement de données 13 du terminal 10 signalant une déficience affectant le service données.

## Revendications

1. Procédé d'itinérance pour un terminal (10) connecté à un premier réseau (1a) de téléphonie mobile et doté d'une carte d'identification d'abonné (11) du terminal (10) qui comprend des moyens de stockage dans lesquels sont stockés des fichiers élémentaires incluant une liste EF-FPLMN de réseaux de téléphonie mobile interdits auxquels le terminal n'est pas autorisé à se connecter et une liste EF-PPLMN de réseaux de téléphonie mobile préférés auxquels le terminal se connecte en priorité, le procédé comprenant la mise en oeuvre par des moyens de traitement de la carte d'identification d'abonné (11) d'étapes de :
(a) Détection d'une déficience affectant le service données dudit premier réseau (1a) auquel le terminal (10) est connecté ;
(b) Inscription dudit premier réseau (1a) pour lequel la déficience affectant le service données a été détectée dans la liste EF-FPLMN de réseaux de téléphonie mobile interdits;
(c) Sélection d'un nouveau réseau de téléphonie mobile (1b, 1c) et connexion du terminal (10) audit nouveau réseau (1b, 1c) ;
(d) Une fois la connexion du terminal (10) audit nouveau réseau (1b, 1c) établie, retrait dudit premier réseau (1a) de la liste EF-PLMN de réseaux de téléphonie mobile interdits ;
le procédé étant **caractérisé en ce que**, pour éviter que ledit premier réseau soit inscrit à la fois dans la liste EF-FPLMN de réseaux de téléphonie mobile interdits et dans la liste EF-PPLMN de réseaux de téléphonie mobile préférés, la liste EF-PPLMN de réseaux de téléphonie mobile préférés est vide ou, si ledit premier réseau (1a) pour lequel la déficience affectant le service données a été détectée est inscrit avant l'étape (a) dans la liste EF-PPLMN de réseaux de téléphonie mobile préférés, il est procédé à l'étape (b) au retrait dudit premier réseau (1a) de la liste EF-PPLMN de réseaux de téléphonie mobile préférés et à l'étape (f) à la réinscription dudit premier réseau (1a) dans la liste EF-PPLMN de réseaux de téléphonie mobile préférés.

2. Procédé selon la revendication 1, dans lequel le service données du nouveau réseau (1b, 1c) est testé suite à l'étape (c), les étapes (b) et (c) étant répétées si une déficience du service données de ce nouveau réseau est ainsi détectée, chacun des réseaux pour lesquels une déficience du service données a été successivement détectée étant retiré de la liste EF-PLMN de réseaux de téléphonie mobile interdits lors de l'étape (d).

3. Procédé selon l'une des revendications précédentes, dans lequel le terminal (10) est connecté à un réseau (1a, 1b, 1c) de téléphonie mobile via un modem (12), l'étape (c) comprenant préalablement à la connexion du terminal (10) au nouveau réseau (1b, 1c) soit la relance dudit modem (12) et/ou de ladite carte d'identification d'abonné (11), soit le rechargement par ledit modem (12) des fichiers contenus dans la carte d'identification d'abonné (11).

4. Procédé selon l'une des revendications précédentes, dans laquelle l'étape (a) comprend la détection d'une perte d'accroche GPRS.

5. Procédé selon la revendication 4, dans laquelle une perte d'accroche GPRS est détectée via la consultation d'un fichier d'informations de localisation GPRS, LOCIGPRS, stocké dans les moyens de stockage de la carte d'identification d'abonné (11).

6. Procédé selon la revendication 5, dans laquelle ledit fichier d'informations de localisation GPRS, LOCIGPRS, est consulté suite à la notification aux moyens de traitement de donnée de la carte d'identification d'abonné (11) d'une mise à jour dudit fichier d'informations de localisation GPRS, LOCIGPRS,

7. Procédé selon l'une des revendications précédentes, dans laquelle l'étape (a) comprend la détection d'un échec d'ouverture d'une session PDP.

8. Procédé selon l'une des revendications précédentes, dans laquelle l'étape (a) comprend la détection par des moyens de traitement (13) du terminal (10) d'une perte de connexion à un serveur distant, et l'envoi à la carte d'identification d'abonné (11) d'une commande caractéristique d'une déficience affectant le service données du premier réseau (1a) auquel le terminal (10) est connecté.

9. Procédé selon l'une des revendications précédentes, dans laquelle l'étape (a) comprend la détection par des moyens de traitement (13) du terminal (10) d'un débit de données anormalement bas, et l'envoi à la carte d'identification d'abonné (11) d'une commande caractéristique d'une déficience affectant le service données du premier réseau (1a) auquel le terminal (10) est connecté.

10. Procédé selon l'une des revendications précédentes, dans laquelle l'étape (a) comprend le déclenchement d'un premier temporisateur et/ou un compteur à la fin duquel les étapes (b) à (d) sont mises en oeuvre.

11. Procédé selon l'une des revendications précédentes, dans laquelle l'étape (d) comprend le déclenchement d'un second temporisateur et/ou un compteur avant la fin duquel le procédé ne peut pas être à nouveau mis en oeuvre.

12. Carte d'identification d'abonné (11) comprenant des moyens de traitement de données et des moyens de stockage de données sur lesquels sont stockés des fichiers élémentaires qui incluent une liste EF-FPLMN de réseaux de téléphonie mobile interdits auxquels le terminal n'est pas autorisé à se connecter et une liste EF-PPLMN de réseaux de téléphonie mobile préférés auxquels le terminal se connecte en priorité, **caractérisé en ce que** les moyens de traitement de la carte d'identification d'abonné (11) sont configurés pour la mise en oeuvre du procédé selon l'une des revendication 1 à 11.

13. Terminal (10) comprenant des moyens de traitement de données (13), des moyens de connexion à un réseau (1a) de téléphonie mobile, **caractérisé en ce qu'**il comprend en outre une carte d'identification d'abonné (11) selon la revendication 12.

## Patentansprüche

1. Roaming-Verfahren für ein Endgerät (10), das mit einem ersten Mobilfunknetz (1a) verbunden ist und mit einem Teilnehmer-Identitätsmodul (11) des Endgeräts (10) versehen ist, das Speichermittel umfasst, in denen Elementardateien gespeichert sind, die eine EF-FPLMN-Liste von unzulässigen Mobilfunknetzen, mit denen das Endgerät nicht berechtigt ist, sich zu verbinden, und eine EF-PPLMN-Liste von bevorzugten Mobilfunknetzen umfassen, mit denen das Endgerät sich prioritär verbindet, wobei das Verfahren die Durchführung der folgenden Schritte durch Verarbeitungsmittel des Teilnehmer-Identitätsmoduls (11) umfasst:
(a) Feststellen eines Mangels, der den Datendienst des ersten Netzes (1a) beeinträchtigt, mit dem das Endgerät (10) verbunden ist;
(b) Eintragen des ersten Netzes (1a), für das der Mangel, der den Datendienst beeinträchtigt, festgestellt wurde, in die EF-FPLMN-Liste von unzulässigen Mobilfunknetzen;
(c) Auswählen eines neuen Mobilfunknetzes (1b, 1c) und Verbinden des Endgeräts (10) mit dem neuen Netz (1b, 1c) ;
(d) nachdem die Verbindung des Endgeräts (10) mit dem neuen Netz (1b, 1c) hergestellt wurde, Entfernen des ersten Netzes (1a) von der EF-PLMN-Liste von unzulässigen Mobilfunknetzen;
wobei das Verfahren **dadurch gekennzeichnet ist, dass**, um zu vermeiden, dass das erste Netz gleichzeitig in der EF-FPLMN-Liste von unzulässigen Mobilfunknetzen und in der EF-PPLMN-Liste von bevorzugten Mobilfunknetzen eingetragen ist, die EF-PPLMN-Liste von bevorzugten Mobilfunknetzen leer ist oder, wenn das erste Netz (1a), für das der Mangel, der den Datendienst beeinträchtigt, festgestellt wurde, vor dem Schritt (a) in der EF-PPLMN-Liste von bevorzugten Mobilfunknetzen eingetragen ist, im Schritt (b) das Entfernen des ersten Netzes (1a) von der EF-PPLMN-Liste von bevorzugten Mobilfunknetzen und im Schritt (f) das erneute Eintragen des ersten Netzes (1a) in die EF-PPLMN-Liste von bevorzugten Mobilfunknetzen vorgenommen werden.

2. Verfahren nach Anspruch 1, wobei der Datendienst des neuen Netzes (1b, 1c) im Anschluss an den Schritt (c) getestet wird, wobei die Schritte (b) und (c) wiederholt werden, wenn ein Mangel des Datendienstes dieses neuen Netzes so festgestellt wird, wobei jedes der Netze, für die ein Mangel des Datendienstes aufeinanderfolgend festgestellt wurde, beim Schritt (d) von der EF-PLMN-Liste von unzulässigen Mobilfunknetzen entfernt wird.

3. Verfahren nach einem der vorhergehenden Ansprüche, wobei das Endgerät (10) über ein Modem (12) mit einem Mobilfunknetz (1a, 1b, 1c) verbunden ist, wobei der Schritt (c) vor der Verbindung des Endgeräts (10) mit dem neuen Netz (1b, 1c) entweder den Neustart des Modems (12) und/oder des Teilnehmer-Identitätsmoduls (11) oder das erneute Laden der in dem Teilnehmer-Identitätsmodul (11) enthaltenen Dateien durch das Modem (12) umfasst.

4. Verfahren nach einem der vorhergehenden Ansprüche, wobei der Schritt (a) das Feststellen eines Verlusts der GPRS-Anbindung umfasst.

5. Verfahren nach Anspruch 4, wobei ein Verlust der GPRS-Anbindung über die Abfrage einer GPRS-Lokalisierungsinformationsdatei, LOCIGPRS, festgestellt wird, die in den Speichermitteln des Teilnehmer-Identitätsmoduls (11) gespeichert ist.

6. Verfahren nach Anspruch 5, wobei die GPRS-Lokalisierungsinformationsdatei, LOCIGPRS, im Anschluss an die Benachrichtigung über eine Aktualisierung der GPRS-Lokalisierungsinformationsdatei, LOCIGPRS, an die Datenverarbeitungsmittel des Teilnehmer-Identitätsmoduls (11) abgefragt wird.

7. Verfahren nach einem der vorhergehenden Ansprüche, wobei der Schritt (a) die Feststellung eines Fehlschlagens einer Eröffnung einer PDP-Sitzung umfasst.

8. Verfahren nach einem der vorhergehenden Ansprüche, wobei der Schritt (a) das Feststellen, durch Verarbeitungsmittel (13) des Endgeräts (10), eines Verlusts der Verbindung mit einem entfernten Server und das Senden eines Befehls, der für einen Mangel charakteristisch ist, der den Datendienst des ersten Netzes (1a) beeinträchtigt, mit dem das Endgerät (10) verbunden ist, an das Teilnehmer-Identitätsmodul (11) umfasst.

9. Verfahren nach einem der vorhergehenden Ansprüche, wobei der Schritt (a) das Feststellen, durch Verarbeitungsmittel (13) des Endgeräts (10), einer abnormal niedrigen Datenübertragungsrate und das Senden eines Befehls, der für einen Mangel charakteristisch ist, der den Datendienst des ersten Netzes (1a) beeinträchtigt, mit dem das Endgerät (10) verbunden ist, an das Teilnehmer-Identitätsmodul (11) umfasst.

10. Verfahren nach einem der vorhergehenden Ansprüche, wobei der Schritt (a) das Auslösen eines ersten Zeitgebers und/oder eines Zählers umfasst, an dessen Ende die Schritte (b) bis (d) durchgeführt werden.

11. Verfahren nach einem der vorhergehenden Ansprüche, wobei der Schritt (d) das Auslösen eines zweiten Zeitgebers und/oder eines Zählers umfasst, vor dessen Ende das Verfahren nicht erneut durchgeführt werden kann.

12. Teilnehmer-Identitätsmodul (11), das Datenverarbeitungsmittel und Datenspeichermittel umfasst, in denen Elementardateien gespeichert sind, die eine EF-FPLMN-Liste von unzulässigen Mobilfunknetzen, mit denen das Endgerät nicht berechtigt ist, sich zu verbinden, und eine EF-PPLMN-Liste von bevorzugten Mobilfunknetzen umfassen, mit denen das Endgerät sich prioritär verbindet, **dadurch gekennzeichnet, dass** die Verarbeitungsmittel des Teilnehmer-Identitätsmoduls (11) für die Durchführung des Verfahrens nach einem der Ansprüche 1 bis 11 ausgestaltet sind.

13. Endgerät (10), das Datenverarbeitungsmittel (13) und Mittel zur Verbindung mit einem Mobilfunknetz (1a) umfasst, **dadurch gekennzeichnet, dass** es ferner ein Teilnehmer-Identitätsmodul (11) nach Anspruch 12 umfasst.

## Claims

1. A roaming method for a terminal (10) connected to a first mobile telephone network (1a) and provided with a subscriber identification card (11) of the terminal (10) which comprises storage means in which are stored elementary files including an EF-FPLMN list of forbidden mobile telephone networks to which the terminal is not allowed to connect and an EF-PPLMN list of preferred mobile telephone networks to which the terminal connects as a priority, the method comprising the implementation by means for processing of the subscriber identification card (11) of the steps of:
(a) Detecting a deficiency affecting the data service of said first network (1a) to which the terminal (10) is connected;
(b) registering said first network (1a) for which the data service deficiency was detected in the EF-FPLMN list of forbidden mobile telephone networks;
(c) selecting a new mobile telephone network (1b, 1c) and connecting the terminal (10) to said new network (1b, 1c);
(d) Once the connection of the terminal (10) to said new network (1b, 1c) has been established, removing said first network (1a) from the EF-PLMN list of forbidden mobile telephone networks;
the method being **characterized in that**, in order to avoid said first network being listed both in the EF-FPLMN list of forbidden mobile phone networks and in the EF-PPLMN list of preferred mobile phone networks, the EF-PPLMN list of preferred cell phone networks is empty or, if said first network (1a) for which the deficiency affecting the data service has been detected is listed before step (a) in the EF-PPLMN list of preferred mobile telephone networks, it is proceeded at step (b) of removing said first network (1a) from the EF-PPLMN list of preferred mobile telephone networks and at step (f) of re-registering said first network (1a) in the EF-PPLMN list of preferred mobile telephone networks.

2. The method of claim 1, wherein the data service of the new network (1b, 1c) is tested following step (c), steps (b) and (c) being repeated if a deficiency in the data service of that new network is thereby detected, each of the networks for which a deficiency in data service has been successively detected being removed from the EF-PLMN list of forbidden mobile telephone networks in step (d).

3. Method according to one of the preceding claims, wherein the terminal (10) is connected to a mobile telephone network (1a, 1b, 1c) via a modem (12), step (c) comprising prior to the connection of the terminal (10) to the new network (1b, 1c) either the reactivation of said modem (12) and/or said subscriber identification card (11), or the reloading by said modem (12) of the files contained in the subscriber identification card (11)

4. The method according to any of the preceding claims, wherein step (a) comprises detecting a loss of GPRS lock.

5. The method according to claim 4, wherein a loss of GPRS lock is detected via consulting a GPRS location information file, LOCIGPRS, stored in the storage means of the subscriber identification card (11).

6. The method according to claim 5, wherein said GPRS location information file, LOCIGPRS, is consulted following notification to the data processing means of the subscriber identification card (11) of an update of said GPRS location information file, LOCIGPRS,.

7. The method according to any of the preceding claims, wherein step (a) comprises detecting a PDP session opening failure.

8. A method according to any of the preceding claims, wherein step (a) comprises detecting by processing means (13) of the terminal (10) a loss of connection to a remote server, and sending to the subscriber identification card (11) a command characteristic of a deficiency affecting the data service of the first network (1a) to which the terminal (10) is connected.

9. A method according to any of the preceding claims, wherein step (a) comprises detecting by processing means (13) of the terminal (10) an abnormally low data rate, and sending to the subscriber identification card (11) a command characteristic of a deficiency affecting the data service of the first network (1a) to which the terminal (10) is connected.

10. The method according to any of the preceding claims, wherein step (a) comprises triggering a first timer and/or counter at the end of which steps (b) through (d) are implemented.

11. The method according to any of the preceding claims, wherein step (d) comprises triggering a second timer and/or a counter before the end of which the method cannot be implemented again.

12. A subscriber identification card (11) comprising data processing means and data storage means on which are stored elementary files which include an EF-FPLMN list of forbidden mobile telephone networks to which the terminal is not allowed to connect and an EF-PPLMN list of preferred mobile telephone networks to which the terminal connects in priority, **characterized in that** the processing means of the subscriber identification card (11) are configured for implementation of the method according to one of claims 1 to 11.

13. Terminal (10) comprising data processing means (13), means for connection to a mobile telephone network (1a), **characterized in that** it further comprises a subscriber identification card (11) according to claim 12.
